# EUROPÄISCHE PATENTANMELDUNG

(11) **EP 2 243 968 A2**
(43) Veröffentlichungstag der Anmeldung: **27.10.2010**
(21) Anmeldenummer: 10001878.7
(22) Anmeldetag: 24.02.2010
(51) Int. Cl.: F16B 7/18, F16B 12/52, F16M 7/00

(54) **Rahmengestell für Anlagen und Maschinen**

(30) Priorität: 22.04.2009 DE 202009005930 U
(71) Anmelder: Mohrbach Verpackungsmaschinen GmbH, 66509 Rieschweiler-Mühlbach (DE)
(72) Erfinder: Demuss, Lutz, Dr., 76829 Landau (DE)
(74) Vertreter: Patentanwälte Möll, Bitterich & Dr. Keller

(57) **Zusammenfassung**

Das Rahmengestell besteht aus senkrechten Ständern (1) mit einem Winkelquerschnitt, waagrechten Streben (2), Knotenelementen 3, Verbindungsmuttern (6), Verbindungsschrauben (10) und ggf. Füßen (4, 5). Ständer (1), Streben (2) und Knotenelemente (3) besitzen fluchtende Bohrungen für die Verbindungsmuttern (6) und die Verbindungsschrauben (10). Zwischen den Knotenelementen (3) und dem Ständer (1) sind Abstandshalter (8) montiert.

## Beschreibung

Die Erfindung betrifft Rahmengestelle für Anlagen und Maschinen gemäß dem Oberbegriff des Anspruchs 1.

Jede technische Anlage, jede Maschine benötigt einen Rahmen, in dem die Anlagen- und Maschinenkomponenten fest und sicher und für eine eventuelle Wartung gut zugänglich montiert werden. Grundsätzlich umfassen diese Rahmengestelle senkrechte Ständer, waagerechte oder auch diagonale Streben, Knotenelemente, Verbindungsschrauben, Verbindungsmuttern und gegebenenfalls Füße. Diese Anlagen- und Maschinengestelle gibt es seit undenkbaren Zeiten in undenkbar vielen Varianten und Ausführungen. In jedem Fall werden die Rahmengestelle im Hinblick auf die aufzunehmenden Anlagen und Maschinenkomponenten dimensioniert, produziert und montiert.

Rahmengestelle gibt es in geschweißter, geschraubter, genieteter oder auch geklebter Ausführung.

Rahmengestelle, die aus vorgefertigten Komponenten zusammengeschraubt oder -genietet werden, ermöglichen eine recht gute Anpassung an die aktuellen Erfordernisse. Allerdings ist die Optik dieser technisch einwandfreien Rahmengestelle oft mangelhaft.

Ein weiteres, meist vernachlässigtes Problem der üblichen Rahmengestellkonstruktionen ist deren mangelhafte Hygiene. In Ecken und Spalten lagern sich im Laufe der Zeit Staub, Fett und Bakterien ab, da eine Reinigung an den schwer zugänglichen Spalten und Ecken nicht oder nur mühsam möglich ist. In Hohlprofilen wurden schon Spinnen und Käfer entdeckt. Das ist unbefriedigend.

Der vorliegenden Erfindung liegt die Aufgabe zugrunde, Rahmengestelle der eingangs genannten Art anzugeben, die aus vorgefertigten Elementen einfach und schnell montiert werden können, die nach Größe und Tragkraft an alle Erfordernisse angepasst werden können, die hygienisch sind und bleiben und die gleichzeitig ein optisch ansprechendes Bild bieten.

Diese Aufgabe wird gelöst durch Rahmengestelle mit den Merkmalen des Anspruchs 1.

Dank der Verwendung von Winkelquerschnitten für die Ständer ergibt sich eine große Stabilität in zwei Ebenen; gleichzeitig sind die Ständer jedoch nur halb so schwer wie die üblicherweise verwendeten Vierkantrohre. Die bei Vierkantrohren oft unvermeidlichen Korrosionsprobleme sind ausgeschaltet. Spinnen und Käfer können sich nicht unbemerkt einnisten. Schmutz oder Bakterien finden keine Spalte, in die sie eindringen können. Alle Oberflächen können dank ausreichend großer gegenseitiger Abstände bei Bedarf leicht gereinigt werden.

Auch wirkt das Rahmengestell leichter und eleganter. Des Weiteren bringt die Verwendung von Ständern mit Winkelquerschnitt die Möglichkeit, die waagerechten oder auch diagonalen Streben an der Innenseite der Ständer zu fixieren. Dadurch sind die Enden der Streben unsichtbar und bilden keine Verletzungsgefahr.

Ein weiterer Vorteil sind die speziellen Verbindungsmuttem, die einen Kopf, einen Schaft und eine zentrische Gewindebohrung besitzen, insbesondere wenn die Gewindebohrung als Sackbohrung ausgeführt ist, weil das Ende der Verbindungsschrauben dadurch unsichtbar bleibt. Erhält der Kopf der Verbindungsmuttern eine ansprechende Form, so ergibt sich insgesamt eine optimale Optik.

Gemäß einer Ausgestaltung der Erfindung besitzen die Knotenelemente einen etwa dreieckigen Querschnitt.

Vorteilhafterweise besitzen die Knotenelemente Ausschnitte, in die die Streben passen. Auf diese Weise werden die Enden der Streben nicht nur geschraubt, sondern gleichzeitig geklemmt, was die Festigkeit des fertigen Rahmengestells zusätzlich erhöht.

Vorzugsweise besitzt wenigstens ein Teil der Knotenelemente eine Gewindebohrung zur höhenverstellbaren Befestigung eines Fußes. Höhenverstellbare Füße ermöglichen die senkrechte und stabile Aufstellung des Rahmengestells auch bei unebenen Bodenverhältnissen.

Vorteilhafterweise sind die Verbindungsschrauben Imbus-Schrauben. Imbus-Schrauben lassen sich so anbringen, dass der Kopf verschwindet; gleichzeitig kann die Imbus-Schraube mit dem entsprechenden Schlüssel jederzeit gedreht werden.

Anhand der Zeichnung soll die Erfindung in Form eines Ausführungsbeispiels näher erläutert werden. Es zeigen jeweils rein schematisch
- Fig. 1: eine erste isometrische Darstellung eines Ausschnitts aus einem Rahmengestell im Bereich eines fußseitigen Knotens,
- Fig. 2: eine zweite isometrische Darstellung des Rahmengestellausschnitts der Fig. 1,
- Fig. 3: eine dritte isometrische Darstellung des Rahmengestellausschnitts der Fig. 1 und 2,
- Fig. 4: einen Querschnitt durch den Rahmengestellausschnitt der Fig. 1 bis 3,
- Fig. 5: eine erste isometrische Darstellung eines Rahmengestellausschnitts im Bereich eines nicht-fußseitigen Knotens,
- Fig. 6: eine zweite isometrische Darstellung des Knotenbereichs der Fig. 5,
- Fig. 7: eine dritte isometrische Darstellung des Knotenbereichs der Fig. 5 und 6 und
- Fig. 8: einen Querschnitt durch den Knotenbereich der Fig. 5 bis 7.

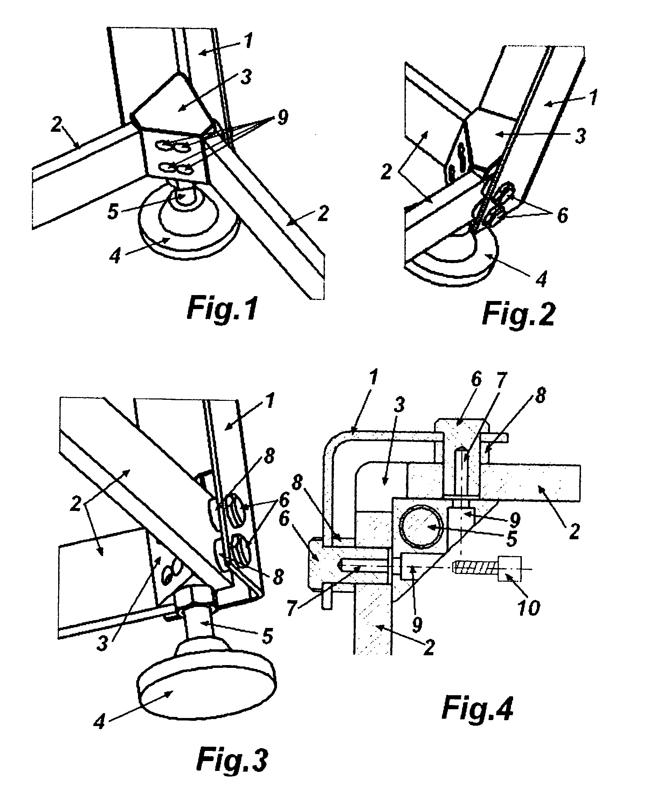

Die Fig. 1, 2 und 3 zeigen in unterschiedlichen isometrischen Darstellungen einen Ausschnitt aus einem Rahmengesteil im Bereich eines fußseitigen Knotens. Man erkennt einen senkrechten Ständer 1 mit einem Winkelquerschnitt, zwei waagerechte Streben 2 mit einem Rechteckquerschnitt und ein Knotenelement 3 mit einem etwa dreieckigen Querschnitt. Das Knotenelement 3 besitzt Ausschnitte, in die die Streben 2 passen.

Die Befestigung von Ständer 1, Streben 2 und Knotenelement 3 erfolgt mit Hilfe von Verbindungsschrauben 10 (Fig. 4) und Verbindungsmuttern 6. Diese Verbindungsmuttern 6 besitzen einen Kopf, einen Schaft und eine zentrische Gewindebohrung 7 (Fig. 4), die als Sackbohrung ausgeführt ist.

Bei der Montage des Rahmengestellecks werden zwischen Ständer 1 und Streben 2 Abstandsbuchsen 8 auf die Schäfte der Verbindungsmuttern 6 aufgesteckt. Auf diese Weise besteht zwischen Ständer 1 und Strebe 2 ein Abstand, der eine Ablagerung von Schmutz oder Bakterien erschwert und ggf. eine ordentliche Reinigung der Oberflächen erlaubt, sowie eine Schattenfuge, die zu einer ansprechenden Optik beiträgt.

Wie Fig. 4 erkennen lässt, besitzt das Knotenelement 3 Bohrungen 9, die mit der zentrischen Gewindebohrung 7 der Verbindungsmuttern 6 fluchten. Auf diese Weise kann mit den Verbindungsschrauben 10 die gesamte Knotenkonstruktion befestigt und gesichert werden.

Fig. 4 lässt des Weiteren erkennen, dass jedenfalls die fußseitigen Knotenelemente 3 eine Gewindebohrung besitzen, in die der Gewindeschaft 5 eines Fußes 4 eingeschraubt werden kann. Dank des Gewindeschaftes 5 ist der Fuß 4 höhenverstellbar zur Anpassung an unebene Bodenverhältnisse.

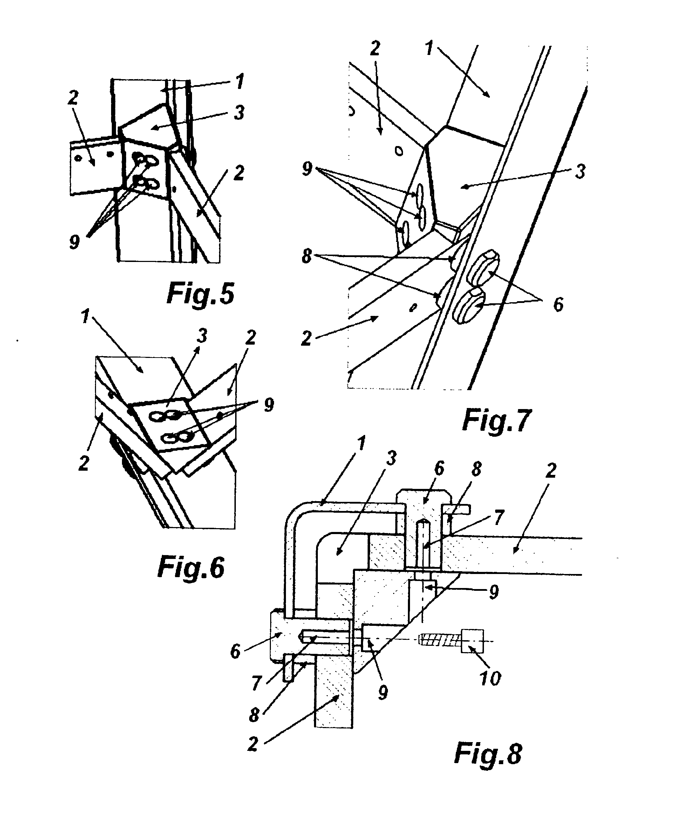

Die Fig. 5, 6 und 7 zeigen unterschiedliche isometrische Darstellungen eines nicht-fußseitigen Knotenbereichs. Fig. 8 zeigt den zugehörigen Querschnitt durch diesen Knotenbereich. Der Aufbau im Knotenbereich entspricht grundsätzlich dem Aufbau des in den Fig. 1 bis 4 dargestellten fußseitigen Knotenbereichs, es fehlt nur die Gewindebohrung für den Gewindeschaft 5 der Füße 4.

## Patentansprüche

1. Rahmengestell für Anlagen und Maschinen, umfassend
- senkrechte Ständer (1),
- waagerechte Streben (2),
- Knotenelemente (3),
- Verbindungsmuttern (6),
- Verbindungsschrauben (10)
- und/oder Füße (4, 5),
**gekennzeichnet durch** die Merkmale:
- die Ständer (1) besitzen einen Winkelquerschnitt,
- die Verbindungsmuttern (6) besitzen einen Kopf, einen Schaft und eine zentrische Gewindebohrung (7),
- die Streben (2) besitzen zum Schaft der Verbindungsmuttern (6) passende Öffnungen,
- die Ständer (1) besitzen zum Schaft der Verbindungsmuttern (6) passende Öffnungen,
- die Knotenelemente (3) besitzen Öffnungen (9), die mit den Öffnungen der Ständer (1) und Streben (2) und den Gewindebohrungen (7) der Verbindungsmuttern (6) fluchten,
- die Verbindungsschrauben (10) sind **durch** die Öffnungen (9) der Knotenelemente (3) in die Gewindebohrungen (7) der Verbindungsmuttern (6) schraubbar,
- zwischen Knotenelement (3) und Ständer (1) sind Abstandhalter (8) montiert.

2. Rahmengestell nach Anspruch 1, **gekennzeichnet durch das** Merkmal:
- die Gewindebohrung (7) im Schaft der Verbindungsmuttern (6) ist eine Sackbohrung.

3. Rahmengestell nach Anspruch 1 oder 2, **gekennzeichnet durch das** Merkmal:
- zwischen Ständer (1) und Strebe (2) ist als Abstandhalter eine Abstandshülse (8) auf den Schaft (7) der Verbindungsmutter (6) aufsteckbar.

4. Rahmengestell nach Anspruch 1, 2 oder 3, **gekennzeichnet durch das** Merkmal:
- die Knotenelemente (3) besitzen einen etwa dreieckigen Querschnitt.

5. Rahmengestell nach wenigstens einem der Ansprüche 1 bis 4, **gekennzeichnet durch das** Merkmal:
- die Knotenelemente (3) besitzen Ausschnitte, in die die Streben (2) passen.

6. Rahmengestell nach wenigstens einem der Ansprüche 1 bis 5, **gekennzeichnet durch das** Merkmal:
- die Knotenelemente (3) besitzen eine Gewindebohrung zur höhenverstellbaren Befestigung eines Fußes (4, 5).

7. Rahmengestell nach wenigstens einem der Ansprüche 1 bis 6, **gekennzeichnet durch das** Merkmal:
- die Verbindungsschrauben (10) sind Imbus-Schrauben.
